# EUROPÄISCHE PATENTANMELDUNG

(11) **EP 1 381 212 A1**
(43) Veröffentlichungstag der Anmeldung: **14.01.2004**
(21) Anmeldenummer: 03014994.2
(22) Anmeldetag: 02.07.2003
(51) Int. Cl.: H04M 7/00, H04M 11/06, H04M 1/253

(54) **Verfahren zur Darstellung von Informationen auf einem Display eines drahtgebundenen Telefonendgeräts**

(30) Priorität: 10.07.2002 DE 10231188
(71) Anmelder: Tenovis GmbH & Co. KG, 60326 Frankfurt am Main (DE)
(72) Erfinder: Kiefert, Marc-Alexander, 65824 Schwalbach/Ts. (DE)
(74) Vertreter: Patentanwaltskanzlei WILHELM & BECK

(57) **Zusammenfassung**

Die Erfindung betrifft ein Verfahren beziehungsweise ein drahtgebundenes Telefonendgerät (1) zur Darstellung von Informationen auf einem Display (10) des drahtgebundenen Telefonendgerätes (1). Bei bekannten Telefonendgeräten (1) ist das Display (10) nur für die Anzeige von fest vorgegebenen Informationen wie beispielsweise Rufnummern, Namen, Terminen, Kalenderfunktionen und ähnliches ausgebildet. Zusätzliche variable Informationen wie Texte, persönliche Nachrichten, grafische Zeichen oder Bildsequenzen sind bei einem drahtgebundenen Telefonendgerät (1) praktisch nicht darstellbar. Erfindungsgemäß wird daher vorgeschlagen, beispielsweise die aus der drahtlosen Telephonie bekannten Techniken wie WAP auch bei drahtgebundenen Telefonendgeräten (1) zu verwenden. Diese Informationen werden von einem Server (7) generiert, der diese Informationen über wenigstens einen zusätzlichen Kanal (D-oder B-Kanal) der Telekommunikationsanlage (5) an das Telefonendgerät (1) überträgt. Dadurch erhält man vorteilhaft eine verbesserte Nutzung des Displays (10) und eine größere Gestaltungsvielfalt von Informationen mit vielseitigen Anwendungsmöglichkeiten.

## Beschreibung

Die Erfindung geht aus von einem Verfahren zur Darstellung von Informationen auf einem Display (Anzeige) eines drahtgebundenen Telefonendgerätes, wobei das Telefonendgerät über ein Telekommunikationsnetz mit einer Telekommunikationsanlage in Verbindung steht und die darzustellenden Informationen einem vorgegebenen Protokoll entnimmt, nach der Gattung der nebengeordneten Ansprüche 1 und 11. Bei bisher bekannten Verfahren zur Darstellung von Informationen auf dem Display eines Telefonendgerätes wird beispielsweise ein zuvor festgelegtes Protokoll genutzt, dem entsprechende Informationen wie eine angewählte Telefonnummer, der Name eines anrufenden Teilnehmers, Telefonbuchfunktionen, Uhrzeit- und Kalenderfunktionen, Termine, Gebühren, Statusanzeigen für Gerätefunktionen usw. entnommen werden. Diese Informationen entnimmt das Telefonendgerät dem Protokoll selbst und stellt sie auf seinem Display dar. Die Darstellung weiterer, insbesondere variable Informationen, beispielsweise Texte, persönliche Nachrichten, grafische Zeichen, Bilder oder Bildsequenzen sind bei einem drahtgebundenen Telefonendgerät praktisch nicht möglich, da das Telefonendgerät diese Funktionen nicht generieren kann.

Bekannt ist weiterhin, dass beispielsweise bei der drahtlosen Telephonie bei sogenannten Handys beliebige Texte und auch grafische Zeichen und Bilder generiert und zum Beispiel als SMS-Mitteilung (short message system) auf dem Display des Handys angezeigt werden können. Derartige Informationen werden jedoch mit speziellen Techniken erzeugt und beispielsweise nach der WAP-Technologie (Wireless Application Protocol) generiert und an das angewählte Handy gesendet. Bei dieser Technologie werden Makrobefehle verwendet, ähnlich wie bei der Internet Programmierung. Informationen in Textform werden direkt an das Handy gesendet, während Grafiken und Symbole in Form von Dateien übertragen werden.

Eine Verwendung derartiger Techniken bei der Telephonie im Festnetz ist bisher nicht bekannt geworden.

Das erfindungsgemäße Verfahren zur Darstellung von Informationen auf einem Display eines drahtgebundenen Endgerätes beziehungsweise das Telefonendgerät mit den kennzeichnenden Merkmalen der nebengeordneten Ansprüche 1 und 11 hat demgegenüber den Vorteil, dass auf dem Display des Telefonendgerätes praktisch beliebige variable Informationen dargestellt werden können, unabhängig davon, ob diese Informationen alphanumerische Zeichen oder Bildpixel enthalten. Dies wird in besonders einfacher Weise dadurch erzielt, dass für die Übertragung der Informationen ein zusätzlicher Übertragungskanal verwendet wird, der in bestimmten Telekommunikationsnetzen ohnehin vorhanden ist. Als besonders vorteilhaft wird dabei angesehen, dass die Informationen von einem entsprechenden Server zentral zur Verfügung gestellt und dann an das Telefonendgerät gesendet werden, so dass Änderungen am Umfang und der Darstellungsform der Informationen an den Telefonendgeräten selbst keine Änderungen der Hardware oder der Software nach sich ziehen. Dieses Verfahren hat den weiteren Vorteil, dass alle Informationen mit der Telekommunikationsanlage abgeglichen werden können. Wird beispielsweise der Leistungsumfang der Telekommunikationsanlage erweitert, dann können die geänderten Funktionen sofort allen Telefonendgeräten zur Verfügung gestellt werden, ohne dass ein weiterer Aufwand erforderlich wäre.

Durch die in den abhängigen Ansprüchen aufgeführten Maßnahmen sind vorteilhafte Weiterbildungen und Verbesserungen des in den nebengeordneten Ansprüche 1 und 11 angegebenen Verfahrens beziehungsweise des Telefonendgerätes gegeben. Als besonders vorteilhaft wird angesehen, dass das Telekommunikationsnetz zwischen der Telekommunikationsanlage und dem Telefonendgerät als ATM-Netz ausgebildet ist. Dieses ATM-Netz weist standardmäßig einen D- und zwei B-Kanäle auf, die für die Informationsübertragung nutzbar sind. Dadurch wird ein Mehraufwand insbesondere von Hardware vorteilhaft vermieden.

Günstig erscheint auch, die Informationen über ein IAD-Interface zu führen, das dem Telefonendgerät vorgeschaltet ist. Dadurch können die Informationen auf einfache Weise angepasst werden.

Weiterhin ergibt sich eine vorteilhafte Lösung durch Verwendung bekannter Techniken, wie sie beispielsweise als WAP- oder XML-Protokolle (Extended Markup Language) bekannt sind. Das WAP-Protokoll (Wireless Application Protocol) wird für die Darstellung von grafischen Zeichen verwendet und passt die Internetsprache HTML (Hyper Text Markup Language) an die Funktionen von mobilen Telekommunikationsgeräten an. Diese Techniken haben sich im Mobilfunk bewährt und können vorteilhaft auch bei drahtgebundenen Telefonendgeräten verwendet werden.

Durch die Verwendung von bekannten Internetsprachen wie HTML, XML oder ANS.1 lässt sich leicht auch die Darstellung von Zeichen und Bildpunkten auf einem drahtgebundenen Telefonendgerät realisieren. Dabei ist auch der Vorteil zu beachten, dass der Programmierer keine neue Programmiersprachen lernen muss, sondern auf bekannte Sprachen zurückgreifen kann, die er dann leichter anwenden kann.

Durch eine zentrale Ablage von Informationen auf dem Server können diese Informationen sofort allen angeschlossenen Telefonendgeräten zur Verfügung gestellt werden.

Günstig erscheint auch, als Server einen WAP-Server zu verwenden, wie er vom Internet her bekannt ist. Dieser WAP-Server wird vorteilhaft über eine CTI-Schnittstelle (Computer Telephone Integration) mit einem CTI-Server mit der Telekommunikationsanlage verbunden, die dann entsprechend gesteuert wird.

Bisher waren insbesondere nur bei digitalen Telefonendgeräten Informationen, beispielsweise die Anzeige der Rufnummer eines anrufenden Teilnehmer möglich. Beim Erfindungsgegenstand können dagegen beliebige variable Informationen auch auf analogen Telefonendgeräten angezeigt werden, wenn sie vom Server entsprechend aufbereitet werden.

Eine einfache Methode beispielsweise zur Anzeige der Rufnummer eines Anrufers kann durch die Clip-Methode erzielt werden.

Bei digitalen Telefonendgeräten können vorteilhaft Informationen mit Hilfe des ISDN-Protokolls (Integrated Services Digital Network) erstellt werden. Dieses Verfahren ist per se bekannt und hat sich bewährt.

Drahtgebundene Telefonendgeräte wie Telefone, Faxgeräte usw. können so mit Hilfe des Erfindungsgegenstandes in vorteilhafter Weise komfortabler genutzt werden.

Der Erfindung liegt die Aufgabe zu Grunde, das Verfahren zur Darstellung von Informationen auf einem Display eines drahtgebundenen Telefonendgerätes dahingehend zu verbessern, dass neben alphanumerischen Zeichen auch beliebige grafische Zeichen oder Bildsequenzen darstellbar sind. Diese Aufgabe wird mit den Merkmalen der nebengeordneten Ansprüche 1 und 11 gelöst.

Ein Ausführungsbeispiel der Erfindung ist in der Zeichnung dargestellt und wird in der nachfolgenden Beschreibung näher erläutert.
Figur 1 zeigt in schematischer Darstellung ein Telekommunikationsnetz mit einer Telekommunikationsanlage, die über ein ATM-Netz mit mehreren Telefonendgeräten verbunden ist,
Figur 2 zeigt beispielhaft den schematisch die Verknüpfungen der einzelnen Baugruppen und
Figur 3 zeigt den Signallauf einer Information zwischen dem Server und der Telekommunikationsanlage.

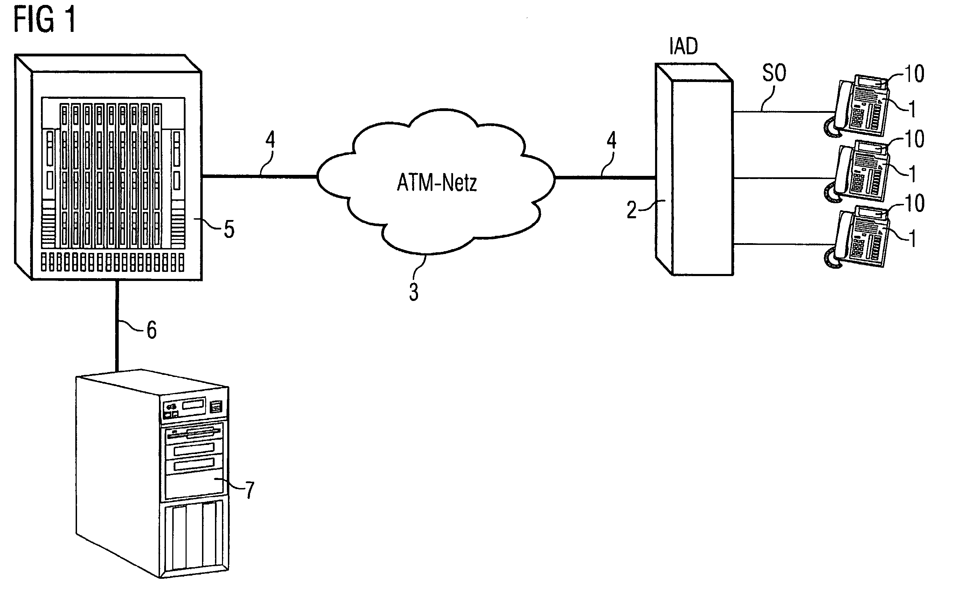

Das Ausführungsbeispiel der Figur 1 zeigt in schematischer Darstellung ein Telekommunikationsnetz 4 mit einer Telekommunikationsanlage 5, die über ein ATM-Netz 3 mit mehreren Telefonendgeräten 1 verbunden ist. Das ATM-Netz (Asynchron Transfer Mode) ist ein digitales Telekommunikationsnetz, wie es beispielsweise als öffentlich zugängliches ISDN-Netz von der Telecom zur Verfügung gestellt wird. Durch die Verwendung des ATM-Netzes 3 können DSL-Verbindung, d.h. DSL (Digital Subscriber Line)-Verbindungen jeglicher Art, z.B. SDSL-, ADSLund GHDSL-Verbindungen die Entfernungen zu den Telefonendgeräten 1 praktisch beliebig groß sein, so dass die Telekommunikationsanlage 5 auch entfernt liegende Telefonendgeräte 1, beispielsweise Telefone oder Faxgeräte erreichen kann. Beim ATM-Netz 3 stehen für jedes Endgerät ein D- und bis zu zwei B-Übertragungskanäle (Kanäle) zur Verfügung. Dabei können die Telefonendgeräte 1 sowohl digitaler als auch analoger Natur sein, wie zum Beispiel Faxgeräte.

Wie der Figur 1 weiter entnehmbar ist, ist den Telefonendgeräten 1 ein IAD-Interface (Integrated Aktive Device) 2 vorgeschaltet, mit dem die auf einem Display 10 des Telefonendgerätes 1 anzuzeigenden Informationen aufbereitet werden. S0 kennzeichnet im Ausführungsbeispiel das per se bekannte ISDN-Netz.

Die Telekommunikationsanlage 5 ist über ein lokales Netz (LAN Local Area Network) 6 mit einem Server 7 verbunden, der vorzugsweise als WAP-Server ausgebildet ist. Der WAP-Server 7 ist über eine CTI-Schnittstelle mit einem CTI-Server verbunden. Räumlich gesehen steht der Server 7 als lokaler Server meistens in der Nähe der Telekommunikationsanlage 5. In ihm sind alle Daten wie Benutzerverzeichnisse usw. gespeichert. Wenn beispielsweise jemand anruft, dann sieht der Server 7 in seinem Adressverzeichnis nach, welcher Name dazu passt und überträgt u.a. auch den Namen auf das dazugehörige Display 10 des Telefonendgerätes 1. Die WAP-Technologie für den Server 7 ist bereits bekannt. Hier wird die Internetsprache HTML für Anwendungen im Bereich mobile Kommunikationsgeräte angepasst. Die HTML-Sprache ist relativ umfangreich und eignet sich daher auch für Anwendungen bei drahtgebundenen Telefonendgeräten 1. Mit der WAP-Technologie wird die Anzeigeseite mit den Informationen generiert, die dann auf dem Display 10 des angerufenen Teilnehmers (Telefonendgerät 1) erscheint.

Alternativ können aber auch andere Beschreibungssprachen wie XML (Extended Makup Language), ANS.1 oder ähnliche verwendet werden.

Bei dem ATM-Netz 4 wird vorzugsweise ein xDSL-Protokoll verwendet, das heißt, das sind DSL-Strecken jeglicher Art. Hier können die vorhandenen beiden B- und der D-Kanal des ATM-Netzes 3 für die Datenübertragung genutzt werden.

Natürlich können in weiterer Ausgestaltung der Erfindung auch andere Netze verwendet werden.

Die einzelnen Baugruppen Telekommunikationsanlage 5, ATM-Netz 3, IAD-Interface 2, Telefonendgeräte 1, Server 7 usw. sind per se bekannt und müssen daher nicht näher erläutert werden.

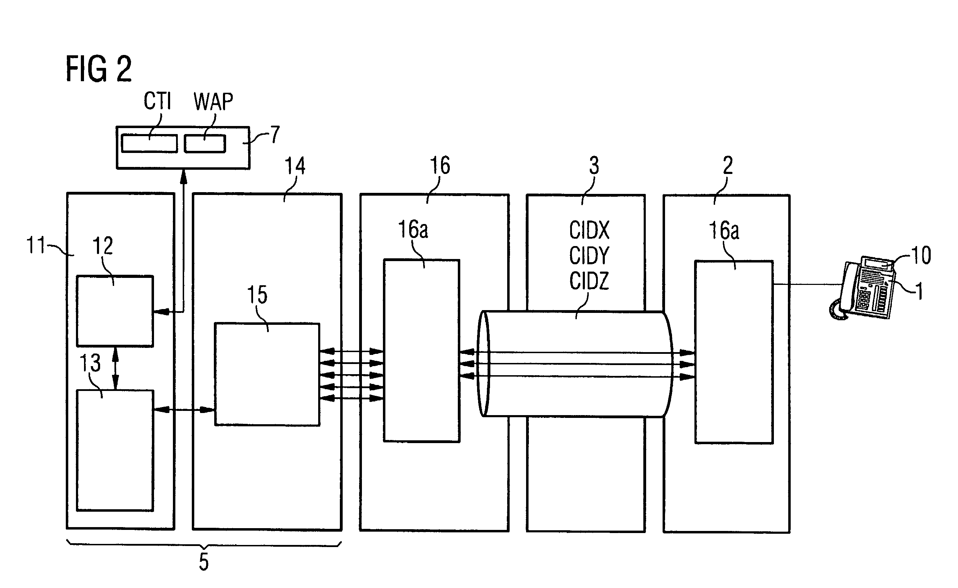

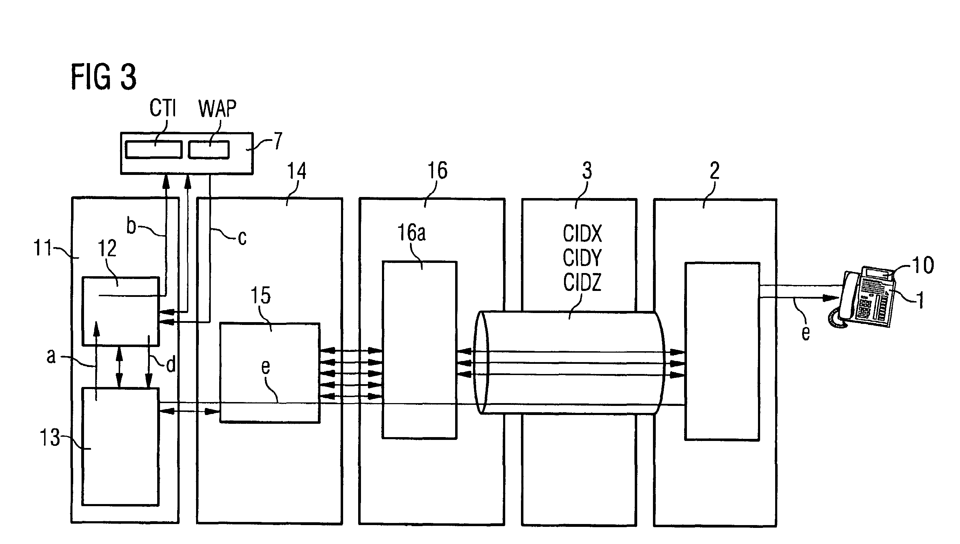

An Hand der Figuren 2 und 3 wird die Funktionsweise der Erfindung näher erläutert. In Figur 2 wird zunächst erläutert, welche Funktionsbereiche gerade ihre Informationen untereinander austauschen. Im linken Teil der Figur 2 ist zunächst die Telekommunikationsanlage 5 mit ihren Baugruppen Steuerung/Control 11 und Schaltmatrix/ Switch 14 erkennbar. Bei der Control 11 sind als wesentliche Baugruppen eine CTI-Control 12 und Switch-Control 13 erkennbar. Die Switch 14 weist im wesentlichen eine Switching Matrix 15 auf. Mit der Telekommunikationsanlage 5 ist der Server 7 verbunden, bei dem beispielsweise der WAP- und der CTI-Server zusammengefasst ist. Ausgangsseitig ist die Telekommunikationsanlage 5 mit einem ATM-Interface 16 verbunden, das mit einem entsprechenden ATM-Multiplexer 16a ausgerüstet ist. Über das ATM-Netz 3 mit den Verbindungen CIDx, CIDy, CIDz werden die Informationen beziehungsweise Signale auf das IAD-Interface 2 geführt, das ebenfalls einen ATM-Multiplexer 16a aufweist. Ausgangsseitig sind beispielsweise über das ISDN-Netz S0 die Telefonendgeräte 1 angeschlossen, wie schon zu Figur 1 erläutert wurde.

Bezüglich der Funktion werden entsprechend der Figuren 2 und 3 durch die Switch-Control 13 der Telekommunikationsanlage 5 die Verbindungen auf- oder abgebaut. Beispielsweise erhält die Switch-Control 13 vom Telefonendgerät 1 den Wählton als Zeichen dafür, dass der Telefonhörer abgenommen wurde. Die gewählten Ziffern einer Rufnummer werden dann von der Switch-Control 13 zum Verbindungsaufbau mit dem gewünschten Teilnehmer weiterverarbeitet. Die CTI-Control 12 tauscht mit der Switch-Control 13 Nachrichten aus, welche Verbindungen gerade hergestellt werden, welche Rufnummer enthalten ist usw. Von der CTI-Control 12 gibt es eine Verbindung zum Server 7, wo übermittelt wird, dass ein bestimmter Teilnehmer angerufen wird und die Rufnummer usw. gesendet wird. Der Verbindungsaufbau zwischen den beiden Telefonendgeräten 1, die miteinander verbunden sind, geht durch den ganzen ATM-Teil 2,3,16 hindurch, wird in der Switching-Matrix 15 verbunden und in der Switch-Control 13 wird das ganze durch Wahl der Rufnummer usw. geschaltet.

In Figur 3 ist anhand von Pfeilen dargestellt, wie ein Verbindungsweg zu einem angewählten Telefonendgerät 1 aufgebaut sein kann. Der Aufbau der Schaltungsanordnung ist in Figur 3 der gleiche, wie er zuvor zu Figur 2 erläutert wurde. Der Pfeil a zeigt, dass die Information zunächst von der Switch-Control 13 zur CTI-Control 12 und dann entlang dem Pfeil b zum CTI-Server 7 gelangt. Im Server 7 wird festgestellt, dass eine Rufnummer xy gewählt wurde. Die Information gelangt danach über die Pfeile c und d wieder zurück zur Switch-Control 13 und dann entsprechend Pfeil e über das ATM-Netz 16,3,2 schließlich zum Telefonendgerät 1.

Mit Hilfe der WAP Technologie lassen sich Informationen beliebiger Art auf dem Display 10 des Telefonendgerätes 1 darstellen, während die Darstellung bei analogen Telefonendgeräten 1 mit der Clip-Methode beziehungsweise bei digitalen Telefonendgeräten 1 mit dem ISDN-Protokoll im Leistungsumfang begrenzt ist. Für die Anzeige von Bildern oder Videosequenzen wäre auch der Austausch von Dateien vorsehbar.

Die Doppelpfeile zeigen die bidirektionalen Signalwege an.

Um Informationen über eine Methode wie WAP, XML oder dergleichen auf ein Telefonendgerät 1 zu übertragen, werden diese auf Grund von Verbindungsdaten der Telekommunikationsanlage 5 mit dem WAP-Server aufbereitet. Dabei werden Verbindungstechnische Daten wie die Rufnummer eines Teilnehmers oder ein elektronisches Telefonbuch von der Telekommunikationsanlage 5 an den CTI-Server übermittelt. Dieser beauftragt dann den WAP-Server mit der grafischen Darstellung dieser Daten im Display 10 des Telefonendgerät 1. Aus Vereinfachungsgründen werden der WAP-Server und der CTI-Server zu einem Server 7 zusammengefasst. Die Telefonendgeräte 1 müssen also in der Lage sein, Informationen im WAP-Format zu verarbeiten.

Soll eine Information, die in der Telekommunikationsanlage 5 bekannt ist, an ein Telefonendgerät 1 gesendet werden, so teilt die Telekommunikationsanlage 5 beispielsweise über die CTI-Schnittstelle (lokales Netz 6) dem Server 7 die entsprechenden Daten mit. Der Server 7 erstellt aus diesen Daten (Template) die entsprechende Display-Seite. Diese Display-Seite wird wieder an die Switch-Control 13 der Telekommunikationsanlage 5 geschickt, die sie über den D-Kanal der ATM-Verbindung transparent, also ohne weitere Veränderung ihrer Daten, an das Telefonendgerät 1 weiterleitet. Die ATM-Strecke wird bevorzugt verwendet. Alternativ ist vorgesehen, an Stelle der CTI-Verbindungen auch andere Verbindungsarten zu verwenden. Geeignet scheinen auch Systemschnittstellen wie TCP/IP.

Wird dagegen eine Information des Telefonendgerätes 1, beispielsweise ein Tastendruck oder eine Menüauswahl in anderer Richtung an die Telekommunikationsanlage 5 gesendet, so wird diese Information vom Telefonendgerät 1 zum Beispiel mit der WAP-Technologie verpackt und an die Telekommunikationsanlage 5 gesendet. Die Telekommunikationsanlage 5 erteilt dem WAP-Server den Auftrag, die Nachricht auszupacken und sie über den CTI-Server an die Telekommunikationsanlage 5 zurückzusenden.

In einem ersten Schritt können diese WAP-Signalisierungen in standardisierten Protokollen wie DSS1 (Digital Subscriber Signalling) in privat erweiterte Informationen oder Mitteilungen verpackt werden. Alternativ lässt sich die gesamte Signalisierung zwischen den Telefonendgeräten 1 auch über die WAP-Protokolle durchführen. In diesem Fall wäre ein WAP-Protokoll-Stack zu installieren.

### Bezugszeichenliste

- 1: Telefonendgerät
- 2: IAD-Interface
- 3: ATM.Netz
- 4: Telekommunikationsnetz
- 5: Telekommunikationsanlage
- 6: Lokales Netz /LAN
- 7: Server
- 10: Display
- 11: Steuerung / Control
- 12: CTI-Control
- 13: Switch-Control
- 14: Schaltmatrix / Switch
- 15: Switching Matrix
- 16: ATM-Interface
- 16a: ATM-Multiplexer
- S0: ISDN-Netz

## Patentansprüche

1. Verfahren zur Darstellung von Informationen auf einem Display (10) eines drahtgebundenen Telefonendgerätes (1), wobei das Telefonendgerät (1) über ein Telekommunikationsnetz (3,4) mit einer Telekommunikationsanlage (5) in Verbindung steht und die darzustellenden Informationen einem vorgegebenen Protokoll entnimmt,
**dadurch gekennzeichnet,**
**dass** zur Darstellung variabler Informationen auf dem Display (10) des drahtgebundenen Telefonendgerätes (1) ein Server (7) vorgesehen ist, der mit der Telekommunikationsanlage (5) verbunden ist und die variablen Informationen auf der Grundlage von Verbindungsdaten der Telekommunikationsanlage (5) zur Verfügung stellt, wobei die variablen Informationen über die Telekommunikationsanlage (5) und einen Übertragungskanal (D-, B-Kanal) des Telekommunikationsnetzes (3,4) an das Telefonendgerät (1) gesendet werden.

2. Verfahren nach Anspruch 1, **dadurch gekennzeichnet, dass** das Telekommunikationsnetz (3,4) ein ATM-Netz ist, wobei die variablen Informationen auf dem D-Übertragungskanal an das Telefonendgerät (1) gesendet erden.

3. Verfahren nach einem der vorhergehenden Ansprüche, **dadurch gekennzeichnet, dass** die Informationen über ein IAD-Interface (2) geführt werden und von diesem Interface für die Darstellung auf dem Display (10) aufbereitet werden.

4. Verfahren nach einem der vorhergehenden Ansprüche, **dadurch gekennzeichnet, dass** die Darstellung von Zeichen und/oder Bildpunkten auf der Basis eines WAP-, XML-Protokolls oder dergleichen erfolgt.

5. Verfahren nach einem der vorhergehenden Ansprüche, **dadurch gekennzeichnet, dass** zur Darstellung von Zeichen und/oder Bildpunkten eine Internetsprache wie HTML, XML, ASN.1 oder dergleichen verwendet wird.

6. Verfahren nach einem der vorhergehenden Ansprüche, **dadurch gekennzeichnet, dass** die Informationen zentral für alle Displays (10) der vorgesehenen Telefonendgeräte (1) auf einem Server (7) abgelegt sind.

7. Verfahren nach Anspruch 6, **dadurch gekennzeichnet, dass** der Server (7) als WAP-Server ausgebildet ist, der mit der Telekommunikationsanlage (5) über eine CTI-Schnittstelle und einem CTI-Server verbunden ist.

8. Verfahren nach einem der vorhergehenden Ansprüche, **dadurch gekennzeichnet, dass** die Informationen für die Anzeige auf einem analogen und/oder einem digitalen Telefonendgerät (1) wie Telefon, Faxgerät usw. aufbereitet werden.

9. Verfahren nach Anspruch 8, **dadurch gekennzeichnet, dass** bei einem analogen Telefonendgerät (1) die Darstellung von Informationen, beispielsweise die Rufnummer eines Anrufenden nach der Clip-Methode erfolgt.

10. Verfahren nach Anspruch 8, **dadurch gekennzeichnet, dass** bei einem digitaler Telefonendgerät (1) die Darstellung von Informationen mit Hilfe eines ISDN-Protokolls erstellt wird.

11. Drahtgebundenes Telefonendgerät mit einem Display (10) zur Anzeige von Informationen, wobei die Informationen in Form eines vorgegebenen Protokolls an das Telefonendgerät (1) übertragbar sind, **dadurch gekennzeichnet, dass** das Telefonendgerät (1) ausgebildet ist, variable Informationen darzustellen, die von einem Server (7) aufbereitet wurden und als Datenstring oder Datei an das Telefonendgerät (1) übertragen wurden.

12. Telefonendgerät nach Anspruch 11, **dadurch gekennzeichnet, dass** das Telefonendgerät (1) als Telefon, als Faxgerät oder dergleichen ausgebildet ist.
